(19) Europäisches Patentamt
European Patent Office
Office européen des brevets

(11) **EP 4 749 586 A1**

(12) **EUROPEAN PATENT APPLICATION**
published in accordance with Art. 153(4) EPC

(43) Date of publication:
**27.05.2026 Bulletin 2026/22**

(21) Application number: **24880967.5**

(22) Date of filing: **29.04.2024**

(51) International Patent Classification (IPC):
***G06V 20/52*** *(2022.01)*

(52) Cooperative Patent Classification (CPC):
**G06V 10/74; G06V 20/52; G06V 40/20;** Y02P 90/30

(86) International application number:
**PCT/CN2024/090482**

(87) International publication number:
**WO 2025/086588 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.10.2023 CN 202311402986**

(71) Applicant: **Zhejiang Uniview Technologies Co., Ltd.**
**Hangzhou, Zhejiang 310051 (CN)**

(72) Inventor: **MA, Yichen**
**Hangzhou, Zhejiang 310051 (CN)**

(74) Representative: **HGF**
**HGF Europe LLP**
**Neumarkter Straße 18**
**81673 München (DE)**

(54) **METHOD AND APPARATUS FOR PERFORMING PEOPLE COUNTING ON BASIS OF FULL-SCENE IMAGE, AND DEVICE AND MEDIUM**

(57)    Provided are a people counting method and apparatus based on a full-scene image, a device, and a medium. The people counting method based on the full-scene image includes detecting a to-be-detected image to obtain multiple initial head-shoulder boxes and multiple full-body boxes in a full scene of the to-be-detected image; for each full-body box, obtaining a corresponding head-shoulder box as a full-body head-shoulder box; and screening the initial head-shoulder boxes and full-body head-shoulder boxes according to matching results between the initial head-shoulder boxes and the full-body head-shoulder boxes to obtain multiple target head-shoulder boxes; and determining a people counting result according to the screened initial head-shoulder boxes and the screened full-body head-shoulder boxes; where the target head-shoulder boxes include the screened initial head-shoulder boxes and the screened full-body head-shoulder boxes.

```
                                                    ┌─ S110
┌──────────────────────────────────────────────────┐
│ Detect a to-be-detected image to obtain multiple  │
│ initial head-shoulder boxes and multiple full-    │
│ body boxes in a full scene of the to-be-detected  │
│ image                                             │
└──────────────────────────────────────────────────┘
                        │
                        ▼                   ┌─ S120
┌──────────────────────────────────────────────────┐
│ For each full-body box, obtain a corresponding    │
│ head-shoulder box as a full-body head-shoulder    │
│ box                                               │
└──────────────────────────────────────────────────┘
                        │
                        ▼                   ┌─ S130
┌──────────────────────────────────────────────────┐
│ Screen the initial head-shoulder boxes and full-  │
│ body head-shoulder boxes according to matching    │
│ results between the initial head-shoulder boxes   │
│ and the full-body head-shoulder boxes to obtain   │
│ multiple target head-shoulder boxes; and          │
│ determine a people counting result according to   │
│ the screened initial head-shoulder boxes and the  │
│ screened full-body head-shoulder boxes; where     │
│ each target head-shoulder box includes an initial │
│ head-shoulder box or a full-body head-shoulder box│
└──────────────────────────────────────────────────┘
```

**FIG. 1**

EP 4 749 586 A1

**Description**

This application claims priority to Chinese Patent Application No. 202311402986.0 filed with the China National Intellectual Property Administration (CNIPA) on Oct. 26, 2023, the disclosure of which is incorporated herein by reference in its entirety.

TECHNICAL FIELD

The present application relates to the field of image detection technology, for example, a people counting method and apparatus based on a full-scene image, a device, and a medium.

BACKGROUND

Regional people counting, as a type of fundamental data in social science, plays an important role in analyzing whether traffic congestion occurs during urban peak hours and in analyzing personnel gathering in surveillance scenarios. With the development of the field of artificial intelligence, the demand for intelligent analysis of regional people counting has been continuously increasing. Artificial intelligence is applied to regional people counting analysis so that human labor input can be greatly reduced and data accuracy can be significantly improved.

In related solutions, the final confidence and location of a target person are calculated using detection features of three types, namely face, human body, and head-shoulder, by adopting Dempster-Shafer theory to combine weights of the three detection results. When the confidence of the target person is greater than a configured threshold, the target person is retained and counted.

However, in these solutions, since face features and head-shoulder features are highly similar, the simultaneous use of these two dimensions cannot effectively improve detection performance and may result in the problem that the same person is assigned different identifiers (IDs), thereby causing duplicate counting. In addition, calculating the final confidence of a target by a weighted summation method significantly weakens the advantages of multi-dimensional features. For example, for a near-distance target whose body is partially occluded, the confidence calculation relies on weighted summation of only face confidence and head-shoulder confidence, resulting in a relatively low confidence value. Overall, multi-dimensional people counting methods may cause duplicate counting due to different IDs assigned to the same person or missed counting of targets due to occlusion, thereby leading to deviation in the final regional people counting result.

SUMMARY

The present application provides a people counting method and apparatus based on a full-scene image, a device, and a medium in which a full-body box is converted into a full-body head-shoulder box to reduce the size difference between a full-body detection box and a head-shoulder detection box, thereby improving the accuracy of people counting based on multi-label matching.

According to an aspect of the present application, a people counting method based on a full-scene image is provided.

The people counting method based on the full-scene image includes detecting a to-be-detected image to obtain multiple initial head-shoulder boxes and multiple full-body boxes in a full scene of the to-be-detected image; for each full-body box, obtaining a corresponding head-shoulder box as a full-body head-shoulder box; and screening the initial head-shoulder boxes and full-body head-shoulder boxes according to matching results between the initial head-shoulder boxes and the full-body head-shoulder boxes to obtain multiple target head-shoulder boxes; and determining a people counting result according to the screened initial head-shoulder boxes and the screened full-body head-shoulder boxes; where each target head-shoulder box includes an initial head-shoulder box or a full-body head-shoulder box.

According to another aspect of the present application, a people counting apparatus based on a full-scene image is provided. The people counting apparatus based on the full-scene image includes an image detection box determination module configured to detect a to-be-detected image to obtain multiple initial head-shoulder boxes and multiple full-body boxes in a full scene of the to-be-detected image; a full-body head-shoulder box determination module configured to, for each full-body box, obtain a corresponding head-shoulder box as a full-body head-shoulder box; and a people counting result determination module configured to screen the initial head-shoulder boxes and full-body head-shoulder boxes according to matching results between the initial head-shoulder boxes and the full-body head-shoulder boxes to obtain multiple target head-shoulder boxes; and determine a people counting result according to the screened initial head-shoulder boxes and the screened full-body head-shoulder boxes; where each target head-shoulder box includes an initial head-shoulder box or a full-body head-shoulder box.

According to another aspect of the present application, an electronic device is provided.

The electronic device includes at least one processor and a memory communicatively connected to the at least one processor. The memory stores a computer program executable by the at least one processor to enable the at least one processor to perform the people counting method based on the full-scene image.

According to another aspect of the present application, a computer-readable storage medium is provided. The computer-readable storage medium stores computer instructions which, when executed by a processor, cause the processor to perform the people counting method based on the full-scene image.

## BRIEF DESCRIPTION OF DRAWINGS

FIG. 1 is a flowchart of a people counting method based on a full-scene image according to embodiments of the present application.

FIG. 2 is a diagram of determining a density estimation line according to embodiments of the present application.

FIG. 3 is a diagram of determining a density estimation line according to embodiments of the present application.

FIG. 4 is a flowchart of a people counting method based on a full-scene image according to embodiments of the present application.

FIG. 5 is a diagram of determining a prediction result according to embodiments of the present application.

FIG. 6 is a diagram illustrating the structure of a people counting apparatus based on a full-scene image according to embodiments of the present application.

FIG. 7 is a diagram illustrating the structure of an electronic device for implementing a people counting method based on a full-scene image according to embodiments of the present application.

## DETAILED DESCRIPTION

Technical solutions in embodiments of the present application are described in conjunction with the drawings in the embodiments of the present application. The embodiments described herein are part, not all, of the embodiments of the present application.

Terms such as "first", "second", and "target" in the description, claims, and drawings of the present application are used for distinguishing between similar objects and are not necessarily used for describing a particular order or sequence. It is to be understood that data used in this manner are interchangeable where appropriate so that the embodiments of the present application described herein can be implemented in an order not illustrated or described herein. In addition, the terms "comprising", "including" and any other variations thereof are intended to encompass a non-exclusive inclusion. For example, a process, method, system, product or device that includes a series of steps or units not only includes the expressly listed steps or units but may also include other steps or units that are not expressly listed or are inherent to such process, method, product or device.

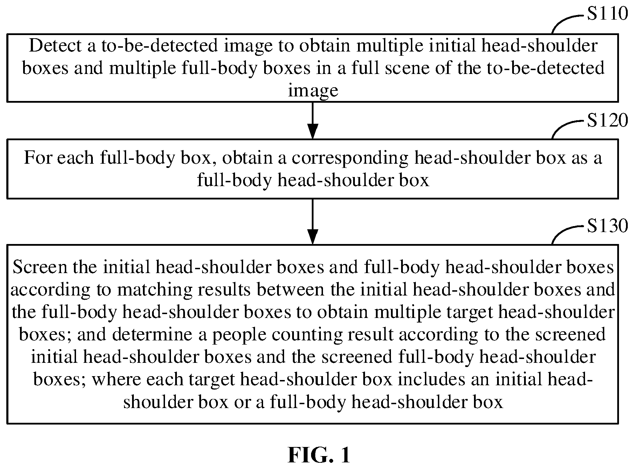

FIG. 1 is a flowchart of a people counting method based on a full-scene image according to embodiments of the present application. This embodiment is applicable to scenarios requiring accurate people counting in a full image scene. The method may be performed by a people counting apparatus based on a full-scene image. The people counting apparatus based on the full-scene image may be implemented in the form of hardware and/or software. The people counting apparatus based on the full-scene image may be configured in an electronic device having a data processing capability. As shown in FIG. 1, the method includes the following:

In S110, a to-be-detected image is detected to obtain multiple initial head-shoulder boxes and multiple full-body boxes in a full scene of the to-be-detected image.

The to-be-detected image may refer to a single-frame image waiting to be detected. The initial head-shoulder box may be used to locate the head-shoulder position of a candidate object in the to-be-detected image. The candidate object may refer to any pedestrian in the to-be-detected image. The full-body box may be used to locate the full-body position of the candidate object in the to-be-detected image.

In this embodiment, the to-be-detected image may be input into a pre-trained target detection model. The initial head-shoulder boxes and the full-body boxes in the full image scene are obtained according to output results of the target detection model. For the same person in the to-be-detected image, only one of an initial head-shoulder box or a full-body box may be detected, or both an initial head-shoulder box and a full-body box may be detected. In a far-distance scenario, since the target is relatively small, head-shoulder detection is relatively difficult; whereas in a near-distance scenario, since the target is relatively large or occlusion occurs between persons, full-body detection is relatively difficult.

In S120, for each full-body box, a corresponding head-shoulder box is obtained as a full-body head-shoulder box.

The full-body head-shoulder box may refer to a head-shoulder box converted from a full-body box. In this embodiment, after the initial head-shoulder boxes and the full-body boxes are obtained, the full-body boxes may be processed to obtain head-shoulder boxes corresponding to the full-body boxes as full-body head-shoulder boxes. The full-body head-shoulder boxes are different from the initial head-shoulder boxes directly detected by the target detection model.

During target tracking, changes in target size may affect tracking performance and may even cause a single target to be identified as two different targets. Therefore, how to reduce frame-to-frame variations between full-body boxes and initial head-shoulder boxes has an important impact on target tracking. Accordingly, to reduce the impact of size variations of different labels on target tracking, this solution performs secondary computation on the full-body boxes to convert the full-body boxes into full-body head-shoulder boxes.

In this embodiment, for each full-body box, obtaining the corresponding head-shoulder box as the full-body head-shoulder box includes determining a human body posture angle within the full-body box and determining a corresponding head-shoulder conversion feature according to the human body posture angle; converting size information and position information of the full-body box according to the head-shoulder conversion feature to obtain size information and position information of the corresponding head-shoulder box; and determining the full-body head-shoulder box according to the size information and the position information of the head-shoulder box.

The human posture angle may refer to an angle between the plane in which the human posture is located and a front-facing viewing normal line of an image acquisition device (such as a camera). By way of example, when a person is in a front-facing or back-facing posture, the human posture angle is 0-30 degrees or 150-180 degrees; when the person is in a side-facing posture, the human posture angle is 30-60 degrees or 120-150 degrees; and when the person is in a side-facing posture, the human posture angle is 60-120 degrees. The head-shoulder conversion feature may characterize a feature for converting a full-body box into a full-body head-shoulder box. By way of example, the head-shoulder conversion feature may include a position conversion feature (such as a coordinate conversion relationship) and a size conversion feature (such as a width and height conversion relationship).

In this embodiment, when converting a full-body box into a full-body head-shoulder box, it is first necessary to determine the human posture angle in the full-body box. By way of example, position localization may be performed on human body parts (such as the head, torso, and limbs) in the full-body box, a human posture is obtained according to results of the position localization, and the human posture angle is determined according to the angle between the plane in which the human posture is located and the front-facing viewing normal line of the camera.

After the human posture angle in the full-body box is determined, a corresponding head-shoulder conversion feature may be determined according to the human posture angle. For example, when the person is at a side-facing posture angle, the width of the head-shoulder box is substantially the same as the width of the full-body box, and the height of the head-shoulder box is approximately one quarter of the height of the full-body box based on experimental simulation. Accordingly, in a side-facing scenario, the coordinates of the top-left corner point and the width and the height of the full-body head-shoulder box are calculated as follows: $w_{PHB}$ = $w_{PB}$, $h_{PHB} = \frac{1}{4} h_{PB}$, $x_{PHB}$ = $x_{PB}$, $y_{PHB}$ = $y_{PB}$.

PHB denotes the full-body head-shoulder box, PB denotes the full-body box, x and y denote the horizontal coordinate of the top-left corner point of the detection box and the vertical coordinate of the top-left corner point of the detection box respectively, and w and h denote the width of the detection box and the height of the detection box respectively. When the person is in a side-facing posture angle, the width of the head-shoulder box is slightly smaller than the width of the full-body box, and the height of the head-shoulder box is approximately one quarter of the height of the full-body box based on experimental simulation. Accordingly, in the side-facing scenario, the coordinates of the top-left corner point and the width and the height of the full-body head-shoulder box are calculated as follows: $w_{PHB} = a_1 * w_{PB}$, $h_{PHB} = \frac{1}{4} h_{PB}$, $x_{PHB} = x_{PB} + (w_{PB} - w_{PHB})/2$, $y_{PHB} = y_{PB}$. $a_1$ is a constant value that may be set according to an actual application scenario. For example, $a_1$ = 0.85. When the person is in a front-facing or back-facing posture angle, the width of the head-shoulder box is even smaller than the width of the full-body box, and the height of the head-shoulder box is approximately one quarter of the height of the full-body box based on experimental simulation. Accordingly, in a front-facing or back-facing scenario, the coordinates of the top-left corner point and the width and the height of the full-body head-shoulder box are calculated as follows: $w_{PHB} = a_2 * w_{PB}$, $h_{PHB} = \frac{1}{4} h_{PB}$, $x_{PHB} = x_{PB} + (w_{PB} - w_{PHB})/2$, $y_{PHB} = y_{PB}$. $a_2$ is a constant value and satisfies $a_2 < a_1$ and may be set according to an actual application scenario. For example, $a_2$ = 0.75.

After the head-shoulder conversion feature is determined, based on the head-shoulder conversion feature (the calculation mode of the coordinates of the top-left corner point of the full-body head-shoulder box and the width and the height of the full-body head-shoulder box), size information and position information of the full-body box may be converted to obtain size information and position information of the corresponding head-shoulder box. Accordingly, the full-body head-shoulder box can be determined according to the size information and the position information of the head-shoulder box. When the size information (the width and the height) and the position information (such as the coordinates of the top-left corner point) of the head-shoulder box are known, the full-body head-shoulder box can be located.

With this configuration, this solution converts the full-body box based on the human posture angle to determine the full-body head-shoulder box, thereby improving the accuracy of conversion from the full-body box to the full-body head-shoulder box.

In S130, the initial head-shoulder boxes and full-body head-shoulder boxes are screened according to matching results between the initial head-shoulder boxes and the full-body head-shoulder boxes to obtain multiple target head-shoulder boxes; and a people counting result is determined according to the screened initial head-shoulder boxes and the screened full-body head-shoulder boxes; where each target head-shoulder box includes an initial head-shoulder box or a full-body head-shoulder box.

In this embodiment, after the initial head-shoulder boxes and the full-body head-shoulder boxes are obtained, the initial head-shoulder boxes and the full-body head-shoulder boxes may be matched, and target head-shoulder boxes are obtained by screening according to the matching results between the initial head-shoulder boxes and the full-body head-shoulder boxes. Each target head-shoulder box includes an initial head-shoulder box or a full-body head-shoulder box. If an initial head-shoulder box and a full-body head-shoulder box are successfully matched (for example, the initial head-shoulder box and the full-body head-shoulder box overlap within an error range), it is indicated that the initial head-shoulder box and the full-body head-shoulder box correspond to the same detection target. If an initial head-shoulder box and a full-body head-shoulder box fail to be matched (for example, the initial head-shoulder box and the full-body head-shoulder box do not overlap within the error range), it is indicated that the initial head-shoulder box and the full-body head-shoulder box correspond to different detection targets. The error range may be set according to actual requirements and is not limited by this embodiment. When the matching is successful, to avoid duplicate detection boxes, one head-shoulder box is removed from the initial head-shoulder box and the full-body head-shoulder box, that is, the target head-shoulder box is obtained by screening. When the matching fails, both the initial head-shoulder box and the full-body head-shoulder box are retained.

In multi-dimensional feature-based regional people counting, if appropriate matching algorithms are not used, duplicate detection boxes may be generated for multiple labels corresponding to the same target, resulting in over-counting; and erroneous deletion may occur for different targets, resulting in under-counting. Therefore, how to reasonably match multi-dimensional detection boxes to obtain final counting boxes is critical for accurately determining the people counting result.

In this embodiment, screening the initial head-shoulder boxes and the full-body head-shoulder boxes according to the matching results between the initial head-shoulder boxes and the full-body head-shoulder boxes to obtain the target head-shoulder boxes includes determining a density estimation line according to positions of the initial head-shoulder boxes and the full-body head-shoulder boxes in the to-be-detected image, where the density estimation line is parallel to a target image edge line corresponding to an edge of a target detection region, the edge of the target detection region is closest to an image acquisition device, the density estimation line divides the to-be-detected image into a near-distance region and a far-distance region, and the near-distance region is a region between the density estimation line and the target image edge line; determining overlap parameters of initial head-shoulder boxes and full-body head-shoulder boxes in the near-distance region and overlap parameters of initial head-shoulder boxes and full-body head-shoulder boxes in the far-distance region; and determining the target head-shoulder boxes according to the overlap parameters.

The target detection region is an entire detection range corresponding to the to-be-detected image currently captured by the image acquisition device. That is, an image obtained when the image acquisition device performs full-screen imaging of the target detection region is the to-be-detected image.

When determining the target head-shoulder boxes by screening according to the matching results between the initial head-shoulder boxes and the full-body head-shoulder boxes, first a density estimation line may be determined according to the positions of the initial head-shoulder boxes and the full-body head-shoulder boxes in the to-be-detected image. The density estimation line divides the to-be-detected image into a near-distance region and a far-distance region. The near-distance region is the region between the density estimation line and the target image edge line. The far-distance region is the region between the density estimation line and an image edge line opposite to the target image edge line. Different screening strategies are used for the near-distance region and the far-distance region. Detection boxes retained in the two regions are integrated as all detection boxes.

When a shooting scene of the image acquisition device remains unchanged, the density estimation line requires to be determined only once. That is, the density estimation line is calculated only once for the same shooting scene. When the shooting scene of the image acquisition device changes, the density estimation line requires to be re-determined.

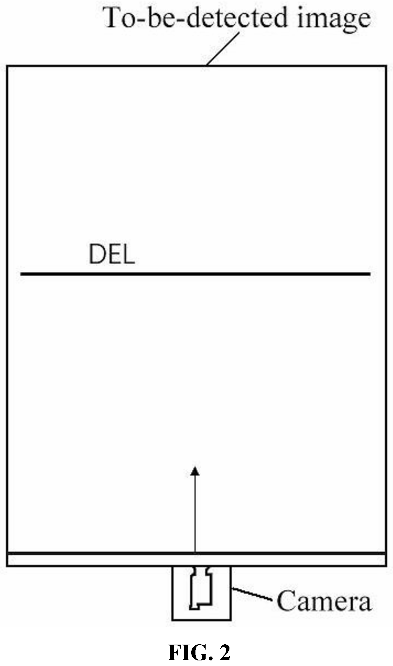

FIG. 2 is a diagram of determining a density estimation line according to embodiments of the present application. Since the bottom portion of the to-be-detected image corresponds to the near-distance region close to the camera, the lower edge of the to-be-detected image is the target image edge line corresponding to the edge of the target detection region. The bottom horizontal line in the to-be-detected image represents any line located in the to-be-detected image and parallel to the target image edge line. The DEL in the to-be-detected image represents the density estimation line. In this case, the region between the DEL and the target image edge line in the to-be-detected image is the near-distance region, and the remaining region is the far-distance region. As shown in FIG. 2, each line parallel to the lower edge may be traversed from bottom to top on a pixel-by-pixel basis (the arrow direction of the line head in FIG. 2 indicates the traversal direction). When the ratio of the number of detection boxes (including initial head-shoulder boxes and full-body head-shoulder boxes) located below the line to the total number of detection boxes in the to-be-detected image is greater than a preset ratio value for the first time, the line is determined as the DEL. The preset ratio value may be set according to an actual application scenario.

Since pixel-by-pixel traversal has relatively high complexity, to reduce the computational overhead, a stepwise method is used in this solution to perform traversal, thereby greatly improving the computational efficiency. Determining the density estimation line according to the positions of the initial head-shoulder boxes and the full-body head-shoulder boxes in the to-be-detected image includes determining multiple candidate density estimation lines according to edge lines located on the initial head-shoulder boxes and the full-body head-shoulder boxes and farthest from the target image edge line; and sorting the candidate density estimation lines in ascending order according to distances from the candidate density estimation lines to the target image edge line; sequentially determining, according to a sorting result, the ratio of the number of initial head-shoulder boxes and full-body head-shoulder boxes within a candidate near-distance region corresponding to each candidate density estimation line to the total number of initial head-shoulder boxes and full-body head-shoulder boxes in the to-be-detected image; and determining a first candidate density estimation line whose ratio is greater than a preset ratio threshold as the density estimation line.

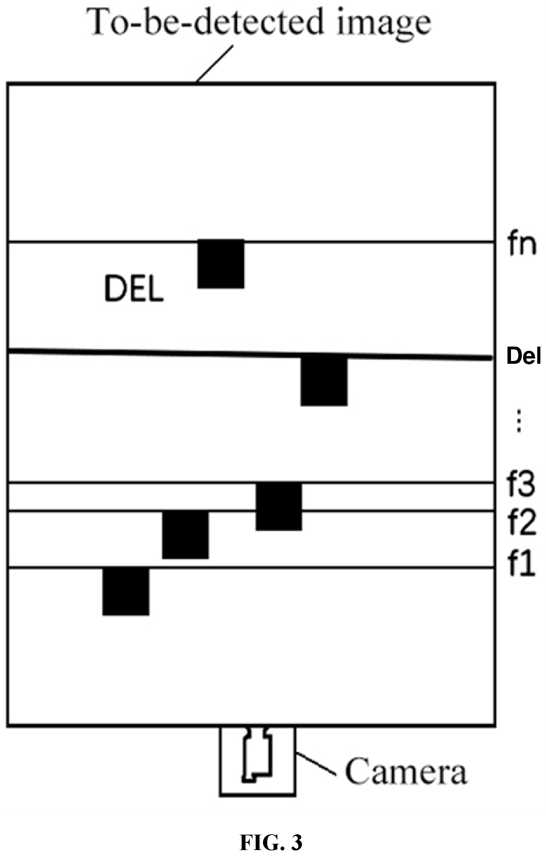

FIG. 3 is a diagram of determining a density estimation line according to embodiments of the present application. The lower edge of the to-be-detected image is the target image edge line. The small square boxes in the to-be-detected image represent initial head-shoulder boxes or full-body head-shoulder boxes. The horizontal lines in the to-be-detected image represent candidate density estimation lines. The DEL represents the density estimation line. [f1, f2, ..., Del, fn] represent the vertical coordinates corresponding to multiple candidate density estimation lines (which may be used to characterize distances between the candidate density estimation lines and the target image edge line).

As shown in FIG. 3, first a step structure is established. Vertical coordinate values corresponding to upper ends (that is, ends away from the camera) of all detection boxes (PHB, HB) in the to-be-detected image are recorded in the step matrix and sorted in ascending order to obtain [f1, f2, ..., Del, fn]. Then, stepwise traversal is performed. Traversal is carried out sequentially from f1 to fn. The number of detection boxes (PHB, HB) located below each candidate density estimation line (that is, within a candidate near-distance region) is calculated. Then, the ratio value is calculated. For each traversed candidate density estimation line, the ratio value corresponding to the candidate density estimation line is calculated according to a first formula. The first formula is pt = Nt/N ($0 \leq t \leq n$). pt represents the ratio value corresponding to the t-th candidate density estimation line, Nt represents the number of detection boxes (PHB, HB) located below the t-th candidate density estimation line, that is, the number of detection boxes in the candidate near-distance region, N represents the total number of detection boxes (PHB, HB) in the to-be-detected image, and n represents the number of candidate density estimation lines. Finally, the calculated ratio values are compared with a preset ratio threshold. The first candidate density estimation line whose ratio value is greater than the preset ratio threshold is determined as the density estimation line. The preset ratio threshold may be set according to actual requirements. For example, the preset ratio threshold may be set to 0.7.

With this configuration, stepwise traversal based on the candidate density estimation lines is used, reducing the algorithm computational overhead and greatly improving the computational efficiency.

After the density estimation line is determined, overlap parameters of initial head-shoulder boxes and full-body head-shoulder boxes in the near-distance region and overlap parameters of initial head-shoulder boxes and full-body head-shoulder boxes in the far-distance region are determined. By way of example, the overlap parameter may be an intersection over union (IOU), expressed as $$IOU = \frac{Rect_{HB} \cap Rect_{PHB}}{Rect_{HB} \cup Rect_{PHB}}.$$

$Rect_{HB}$ represents the coverage range of the initial head-shoulder box. $Rect_{PHB}$ represents the coverage range of the full-body head-shoulder box. In the near-distance region and the far-distance region, the IOU between each initial head-shoulder box and each full-body head-shoulder box may be calculated as the overlap parameter.

After the overlap parameters are determined, target head-shoulder boxes may be determined by screening according to the overlap parameters. Determining the target head-shoulder boxes according to the overlap parameters includes determining initial head-shoulder boxes and full-body head-shoulder boxes whose overlap parameters are greater than a preset overlap threshold as candidate initial head-shoulder boxes and candidate full-body head-shoulder boxes; in response to the candidate initial head-shoulder boxes and the candidate full-body head-shoulder boxes being located in the near-distance region, removing the candidate full-body head-shoulder boxes; and in response to the candidate initial head-shoulder boxes and the candidate full-body head-shoulder boxes being located in the far-distance region, removing the candidate initial head-shoulder boxes.

During screening of the target head-shoulder boxes, each overlap parameter is compared with the preset overlap threshold, and initial head-shoulder boxes and full-body head-shoulder boxes whose overlap parameters are greater than the preset overlap threshold are determined as candidate initial head-shoulder boxes and candidate full-body head-shoulder boxes. When the overlap parameter is greater than the preset overlap threshold, it can be determined that the initial head-shoulder box and the corresponding full-body head-shoulder box belong to the same detection target, and screening is performed according to the type of the region (that is, the near-distance region or the far-distance region) where the initial head-shoulder box and the full-body head-shoulder box are located. If the candidate initial head-shoulder boxes and the candidate full-body head-shoulder boxes are located in the near-distance region, the candidate full-body head-shoulder boxes are removed, and the initial head-shoulder boxes and the remaining full-body head-shoulder boxes are retained to obtain near-distance detection boxes. If the candidate initial head-shoulder boxes and the candidate full-body head-shoulder boxes are located in the far-distance region, the candidate initial head-shoulder boxes are removed, and the full-body head-shoulder boxes and the remaining initial head-shoulder boxes are retained to obtain far-distance detection boxes.

With this configuration, detection boxes with different labels corresponding to the same detection target can be removed, and initial head-shoulder boxes and full-body head-shoulder boxes in near-distance and far-distance scenarios can be retained to the greatest extent, so that the advantages of the two types of detection are fully utilized to improve the detection performance, thereby improving the accuracy of regional people counting.

After obtaining the target head-shoulder boxes through screening, the people counting result may be determined according to the screening result. Near-distance detection boxes retained in the near-distance region and far-distance detection boxes retained in the far-distance region are integrated to obtain final detection boxes. Each final detection box corresponds to only one detection target. Accordingly, the number of the final detection boxes may be directly determined as the people counting result.

The technical solution of this embodiment of the present application includes detecting a to-be-detected image to obtain multiple initial head-shoulder boxes and multiple full-body boxes in a full scene of the to-be-detected image; for each full-body box, obtaining a corresponding head-shoulder box as a full-body head-shoulder box; and screening the initial head-shoulder boxes and full-body head-shoulder boxes according to matching results between the initial head-shoulder boxes and the full-body head-shoulder boxes to obtain multiple target head-shoulder boxes; and determining a people counting result according to the screened initial head-shoulder boxes and the screened full-body head-shoulder boxes; where each target head-shoulder box includes an initial head-shoulder box or a full-body head-shoulder box. In this solution, a full-body box is converted into a full-body head-shoulder box to reduce the size difference between a full-body detection box and a head-shoulder detection box, thereby improving the accuracy of people counting based on multi-label matching.

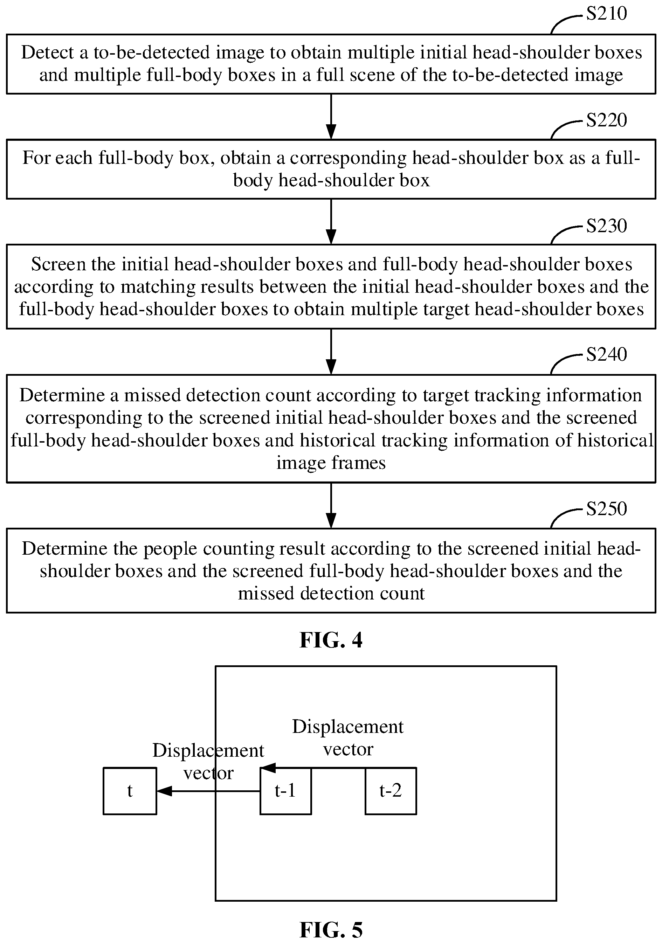

FIG. 4 is a flowchart of a people counting method based on a full-scene image according to embodiments of the present application. This embodiment is described based on the previous embodiments. Determining the people counting result according to the screened initial head-shoulder boxes and the screened full-body head-shoulder boxes includes determining a missed detection count according to target tracking information corresponding to the screened initial head-shoulder boxes and the screened full-body head-shoulder boxes and historical tracking information of historical image frames; and determining the people counting result according to the screened initial head-shoulder boxes and the screened full-body head-shoulder boxes and the missed detection count.

As shown in FIG. 4, the method of this embodiment includes the following:

In S210, a to-be-detected image is detected to obtain multiple initial head-shoulder boxes and multiple full-body boxes in a full scene of the to-be-detected image.

In S220, for each full-body box, a corresponding head-shoulder box is obtained as a full-body head-shoulder box.

In S230, the initial head-shoulder boxes and full-body head-shoulder boxes are screened according to matching results between the initial head-shoulder boxes and the full-body head-shoulder boxes to obtain multiple target head-shoulder boxes.

Each target head-shoulder box includes an initial head-shoulder box or a full-body head-shoulder box. For implementation of S210 to S230, see the description of S110 to S130.

In S240, a missed detection count is determined according to target tracking information corresponding to the screened initial head-shoulder boxes and the screened full-body head-shoulder boxes and historical tracking information of historical image frames.

In practical application scenarios, for targets within the detection region, adverse factors such as occlusion or illumination interference may cause missed detection of the targets, resulting in a counted number being smaller than the actual value. For example, when no target is missed, the sum of the screened initial head-shoulder boxes and the screened full-body head-shoulder boxes is the correct people counting result; and when one or more targets are missed, for example, one target is missed in one frame of the to-be-detected image, the people counting result is the actual number minus one, and the counting result is inaccurate. Therefore, how to ensure the accuracy of target counting in the case of abnormal missed detection of targets within a short period of time is an important aspect of this solution.

In this embodiment, to address missed target detection caused by environmental interference, after screening of the target head-shoulder boxes, the missed detection count may be determined according to the target tracking information corresponding to the screened initial head-shoulder boxes and the screened full-body head-shoulder boxes and the historical tracking information of historical image frames. Determining the missed detection count according to the target tracking information corresponding to the screened initial head-shoulder boxes and the screened full-body head-shoulder boxes and the historical tracking information of the historical image frames includes determining missing targets in the to-be-detected image according to the historical tracking information and the target tracking information and determining the number of consecutive lost frames of the missing targets; determining, according to historical tracking information of the missing targets, a prediction result indicating whether the missing targets are outside the detection region of the to-be-detected image; and determining the missed detection count of the missing targets in the to-be-detected image according to the number of consecutive lost frames and the prediction result.

When the missed detection count is determined, missing targets in the to-be-detected image may be determined according to the historical tracking information and the target tracking information, and the number of consecutive lost frames of the missing targets may be determined. The missing targets may refer to targets that exist in historical frame images but do not exist in the to-be-detected image. The number of consecutive lost frames may refer to the number of consecutive frames in which the missing targets are not detected. Each target has unique identification information (such as an ID). If an ID exists in the historical tracking information but does not exist in the target tracking information, that is, the ID exists in the historical frame images but does not exist in the to-be-detected image, the target corresponding to the ID may be determined as a missing target in the to-be-detected image. By way of example, assuming that the current frame is the t-th frame, if a target is detected in the (t-2)-th frame but is not detected in the (t-1)-th frame and the t-th frame, the target may be determined as a missing target in the to-be-detected image, and the number of consecutive lost frames of this missing target is determined as 2.

After determining the missing targets and the number of consecutive lost frames of the missing targets, a prediction result indicating whether the missing targets are outside the detection region of the to-be-detected image may be determined according to the historical tracking information of the missing targets. FIG. 5 is a diagram of determining a prediction result according to embodiments of the present application. In FIG. 5, the large box represents the to-be-detected image, the small boxes represent the positions of the same missing target in the (t-2)-th frame, the (t-1)-th frame, and the t-th frame, respectively, and the t-th frame is the current frame. By way of example, as shown in FIG. 5, the displacement vector $[\vec{x}, \vec{y}]$ of the center point position of a missing target from the position (x2, y2) in the (t-2)-th frame to the position (x1, y1) in the (t-1)-th frame is calculated. $\vec{x} = x1 - x2$. $\vec{y} = y1 - y2$. Then the position (xt, yt) of the missing target in the t-th frame is predicted. $xt = x1 + \vec{x}$. $yt = y1 + \vec{y}$. Finally, the prediction result of whether the missing target is outside the detection region of the to-be-detected image is determined according to whether (xt, yt) is beyond the detection region. If (xt, yt) is beyond the detection region, it can be determined that the missing target is outside the detection region of the to-be-detected image. If (xt, yt) is not outside the detection region, it can be determined that the missing target is not outside the detection region of the to-be-detected image.

By way of example, a target information matrix may be preset. The target information matrix includes target ID information, L-Tag identification information, and L-Age identification information. The L-Tag identification information indicates whether a target in the to-be-detected image is likely to be outside the detection region. The L-Age identification information indicates the actual number of consecutive lost frames of the target. For example, the target information matrix may be expressed as follows:

| ID | L-Tag | L-Age |
|----|-------|-------|
| 2  | 0     | 0     |
| 4  | 1     | 2     |
| ... | ...  | ...   |

An L-Tag value of 0 indicates that the target is predicted to be not outside the detection region. An L-Tag value of 1 indicates that the target is predicted to be outside the detection region. During tracking, if a missing target is detected again, the L-Age may be reset to 0 and counted again.

Finally, the missed detection count of the missing targets in the to-be-detected image may be determined according to the number of consecutive lost frames and the prediction result. By way of example, for a missing target, if L-Tag is 0 (indicating that the missing target is predicted to be not outside the detection region) and L-Age $\leq$ 3, it can be determined that the missing target is an abnormal missed-detection target, and the missing target is counted into the missed detection count; if L-Tag is 0 (indicating that the missing target is predicted to be not outside the detection region) and L-Age > 3, it can be determined that the missing target is a normal missed-detection target, and the missing target is not counted into the missed detection count; and if L-Tag is 1 (indicating that the missing target is predicted to be outside the detection region), it can be determined that the missing target is a normal missed-detection target, and the missing target is not counted into the missed detection count.

In S250, the people counting result is determined according to the screened initial head-shoulder boxes and the screened full-body head-shoulder boxes and the missed detection count.

In this embodiment, after the missed detection count is determined, the sum of the number of the screened initial head-shoulder boxes and the screened full-body head-shoulder boxes and the missed detection count may be used as the final people counting result.

In the solution of this embodiment of the present application, after screening of the target head-shoulder boxes, the missed detection count is determined according to the target tracking information corresponding to the screened initial head-shoulder boxes and the screened full-body head-shoulder boxes and the historical tracking information of historical image frames; and the people counting result is determined according to the screened initial head-shoulder boxes and the screened full-body head-shoulder boxes and the missed detection count. In this solution, a full-body box is converted into a full-body head-shoulder box to reduce the size difference between a full-body detection box and a head-shoulder detection box, thereby improving the accuracy of people counting based on multi-label matching. Moreover, the people counting result can be corrected based on the missed detection count, thereby further improving the accuracy of people counting.

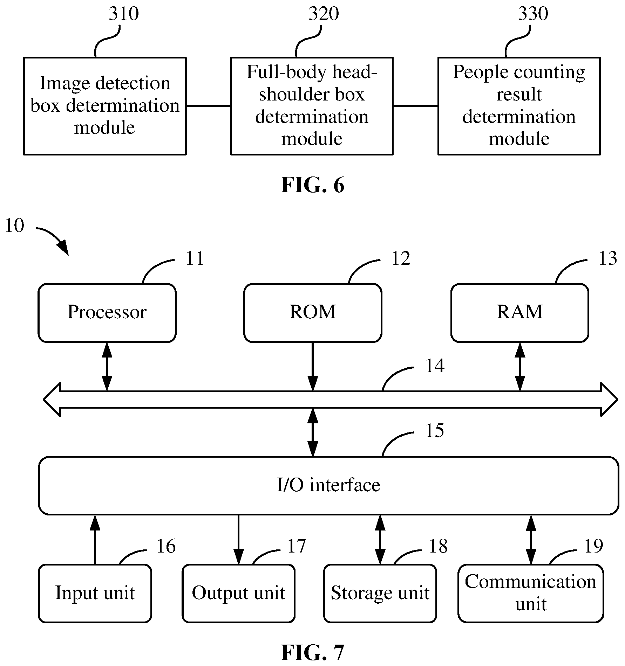

FIG. 6 is a diagram illustrating the structure of a people counting apparatus based on a full-scene image according to embodiments of the present application. The people counting apparatus based on the full-scene image can perform the people counting method based on the full-scene image of any embodiment of the present application and has function modules and beneficial effects corresponding to the performed method. As shown in FIG. 6, the apparatus includes an image detection box determination module 310, a full-body head-shoulder box determination module 320, and a people counting result determination module 330.

The image detection box determination module 310 is configured to detect a to-be-detected image to obtain multiple initial head-shoulder boxes and multiple full-body boxes in a full scene of the to-be-detected image. The full-body head-shoulder box determination module 320 is configured to, for each full-body box, obtain a corresponding head-shoulder box as a full-body head-shoulder box. The people counting result determination module 330 is configured to screen the initial head-shoulder boxes and full-body head-shoulder boxes according to matching results between the initial head-shoulder boxes and the full-body head-shoulder boxes to obtain multiple target head-shoulder boxes; and determine a people counting result according to the screened initial head-shoulder boxes and the screened full-body head-shoulder boxes; where each target head-shoulder box includes an initial head-shoulder box or a full-body head-shoulder box.

In an embodiment, the full-body head-shoulder box determination module 320 is configured to determine a human body posture angle within the full-body box and determine a corresponding head-shoulder conversion feature according to the human body posture angle; convert size information and position information of the full-body box according to the head-shoulder conversion feature to obtain size information and position information of the corresponding head-shoulder box; and determine the full-body head-shoulder box according to the size information and the position information of the head-shoulder box.

In an embodiment, the people counting result determination module 330 includes a density estimation line determination unit, an overlap parameter determination unit, and a target head-shoulder box screening unit.

The density estimation line determination unit is configured to determine a density estimation line according to positions of the initial head-shoulder boxes and the full-body head-shoulder boxes in the to-be-detected image, where the density estimation line is parallel to a target image edge line corresponding to an edge of a target detection region, the edge of the target detection region is closest to an image acquisition device, the density estimation line divides the to-be-detected image into a near-distance region and a far-distance region, and the near-distance region is a region between the density estimation line and the target image edge line.

The overlap parameter determination unit is configured to determine overlap parameters of initial head-shoulder boxes and full-body head-shoulder boxes in the near-distance region and overlap parameters of initial head-shoulder boxes and full-body head-shoulder boxes in the far-distance region.

The target head-shoulder box screening unit is configured to determine the target head-shoulder boxes according to the overlap parameters.

In an embodiment, the density estimation line determination unit is configured to determine multiple candidate density estimation lines according to edge lines located on the initial head-shoulder boxes and the full-body head-shoulder boxes and farthest from the target image edge line; and sort the candidate density estimation lines in ascending order according to distances from the candidate density estimation lines to the target image edge line; sequentially determine, according to a sorting result, the ratio of the number of initial head-shoulder boxes and full-body head-shoulder boxes within a candidate near-distance region corresponding to each candidate density estimation line to the total number of initial head-shoulder boxes and full-body head-shoulder boxes in the to-be-detected image; and determine a first candidate density estimation line whose ratio is greater than a preset ratio threshold as the density estimation line.

In an embodiment, the target head-shoulder box screening unit is configured to determine initial head-shoulder boxes and full-body head-shoulder boxes whose overlap parameters are greater than a preset overlap threshold as candidate initial head-shoulder boxes and candidate full-body head-shoulder boxes; in response to the candidate initial head-shoulder boxes and the candidate full-body head-shoulder boxes being located in the near-distance region, remove the candidate full-body head-shoulder boxes; and in response to the candidate initial head-shoulder boxes and the candidate full-body head-shoulder boxes being located in the near-distance region, remove the candidate initial head-shoulder boxes.

In an embodiment, the people counting result determination module 330 includes a missed detection count determination unit and a people counting result determination unit.

The missed detection count determination unit is configured to, after obtaining the target head-shoulder boxes, determine a missed detection count according to target tracking information corresponding to the screened initial head-shoulder boxes and the screened full-body head-shoulder boxes and historical tracking information of historical image frames.

The people counting result determination unit is configured to determine the people counting result according to the screened initial head-shoulder boxes and the screened full-body head-shoulder boxes and the missed detection count.

In an embodiment, the missed detection count determination unit is configured to determine missing targets in the to-be-detected image according to the historical tracking information and the target tracking information and determine the number of consecutive lost frames of the missing targets; determine, according to historical tracking information of the missing targets, a prediction result indicating whether the missing targets are outside the detection region of the to-be-detected image; and determine the missed detection count of the missing targets in the to-be-detected image according to the number of consecutive lost frames and the prediction result.

The people counting apparatus based on the full-scene image of this embodiment of the present application can perform the people counting method based on the full-scene image of any embodiment of the present application and has function modules and effects corresponding to the performed method.

FIG. 7 is a diagram illustrating the structure of an electronic device 10 for implementing embodiments of the present application. The electronic device is intended to represent various forms of digital computers, for example, a laptop computer, a desktop computer, a worktable, a personal digital assistant, a server, a blade server, a mainframe computer, or another applicable computer. The electronic device may also represent various forms of mobile apparatuses, for example, a personal digital assistant, a cellphone, a smartphone, a wearable device (such as a helmet, glasses, or a watch), or another similar computing apparatus. Herein the shown components, the connections and relationships between these components, and the functions of these components are merely illustrative and are not intended to limit the implementation of the present application as described and/or claimed herein.

As shown in FIG. 7, the electronic device 10 includes at least one processor 11 and a memory communicatively connected to the at least one processor 11, such as a read-only memory (ROM) 12 and a random-access memory (RAM) 13. The memory stores a computer program executable by the at least one processor. A processor 11 may perform various appropriate actions and processing according to a computer program stored in the ROM 12 or a computer program loaded into the RAM 13 from a storage unit 18. The RAM 13 may also store various programs and data required for the operation of the electronic device 10. The processor 11, the ROM 12, and the RAM 13 are connected to each other through a bus 14. An input/output (I/O) interface 15 is also connected to the bus 14.

Multiple components in the electronic device 10 are connected to the I/O interface 15. The multiple components include an input unit 16 such as a keyboard and a mouse, an output unit 17 such as various types of displays and speakers, the storage unit 18 such as a magnetic disk and an optical disk, and a communication unit 19 such as a network card, a modem and a wireless communication transceiver. The communication unit 19 allows the electronic device 10 to exchange information/data with other devices over a computer network such as the Internet and/or various telecommunications networks.

The at least one processor 11 may be various general-purpose and/or special-purpose processing components having processing and computing capabilities. Examples of the processor 11 include a central processing unit (CPU), a graphics processing unit (GPU), a special-purpose artificial intelligence (AI) computing chip, a processor executing machine learning models and algorithms, a digital signal processor (DSP), and any appropriate processor, controller and microcontroller. The at least one processor 11 performs various preceding methods and processing, such as the people counting method based on the full-scene image.

In some embodiments, the people counting method based on the full-scene image may be implemented as computer programs tangibly contained in a computer-readable storage medium such as the storage unit 18. In some embodiments, part or all of the computer programs may be loaded and/or mounted onto the electronic device 10 via the ROM 12 and/or the communication unit 19. When the computer programs are loaded to the RAM 13 and executed by the processor 11, one or more steps of the people counting method based on the full-scene image may be performed. Alternatively, in other embodiments, the at least one processor 11 may be configured, in any other suitable manners (for example, by use of firmware), to perform the people counting method based on the full-scene image.

The various embodiments of the systems and techniques described herein may be implemented in digital electronic circuitry, integrated circuitry, a field-programmable gate array (FPGA), an application-specific integrated circuit (ASIC), application specific standard product (ASSP), a system on a chip (SoC), a complex programmable logic device (CPLD), computer hardware, firmware, software and/or a combination thereof. These various embodiments may include implementations in one or more computer programs. The one or more computer programs are executable and/or interpretable on a programmable system including at least one programmable processor. The at least one programmable processor may be a special-purpose or general-purpose programmable processor for receiving data and instructions from a storage system, at least one input apparatus and at least one output apparatus and transmitting data and instructions to the storage system, the at least one input apparatus and the at least one output apparatus.

Computer programs for implementation of the methods of the present application may be written in one programming language or any combination of multiple programming languages. The computer programs may be provided for a processor of a general-purpose computer, a special-purpose computer, or another programmable data processing apparatus to enable functions/operations specified in a flowchart and/or a block diagram to be implemented when the computer programs are executed by a processor. The computer programs may be executed entirely on a machine, partly on a machine, as a stand-alone software package, partly on a machine and partly on a remote machine, or entirely on a remote machine or a server.

In the context of the present application, the computer-readable storage medium may be a tangible medium that may include or store a computer program used by or in conjunction with an instruction execution system, apparatus, or device. The computer-readable storage medium may include an electronic, magnetic, optical, electromagnetic, infrared, or semiconductor system, apparatus, or device or any appropriate combination thereof. Alternatively, the computer-readable storage medium may be a machine-readable signal medium. Examples of the machine-readable storage medium may include an electrical connection based on one or more wires, a portable computer disk, a hard disk, an RAM, an ROM, an erasable programmable read-only memory (EPROM), a flash memory, an optical fiber, a portable compact disk read-only memory (CD-ROM), an optical memory device, a magnetic memory device, or any suitable combination thereof.

In order that interaction with a user is provided, the systems and techniques described herein may be implemented in the electronic device. The electronic device has a display apparatus (for example, a cathode-ray tube (CRT) or a liquid-crystal display (LCD) monitor) for displaying information to the user; and a keyboard and a pointing apparatus (for example, a mouse or a trackball) through which the user can provide input for the electronic device. Other types of devices may also be used for providing interaction with a user. For example, feedback provided for the user may be sensory feedback in any form (for example, visual feedback, auditory feedback or haptic feedback). Moreover, input from the user may be received in any form (including acoustic input, voice input or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which the user can interact with embodiments of the systems and techniques described herein), or a computing system including any combination of such back-end, middleware, or front-end components. Components of a system may be interconnected by any form or medium of digital data communication (for example, a communication network). Examples of the communication network include a local area network (LAN), a wide area network (WAN), a blockchain network, and the Internet.

The computing system may include clients and servers. A client and a server are generally remote from each other and typically interact through a communication network. The relationship between the client and the server arises by virtue of computer programs running on respective computers and having a client-server relationship to each other. The server may be a cloud server, which is also referred to as a cloud computing server or a cloud host. As a host product in a cloud computing service system, the server solves the defects of difficult management and weak service scalability in conventional physical host and virtual private server (VPS) services.

Various forms of the preceding flows may be used, with steps reordered, added, or removed. For example, the steps described in the present application may be executed in parallel, in sequence, or in a different order as long as the desired results of the technical solutions in the present application are achieved. The execution sequence of these steps is not limited herein.

## Claims

1. A people counting method based on a full-scene image, comprising:

   detecting a to-be-detected image to obtain a plurality of initial head-shoulder boxes and a plurality of full-body boxes in a full scene of the to-be-detected image;
   for each full-body box, obtaining a corresponding head-shoulder box as a full-body head-shoulder box; and

screening the plurality of initial head-shoulder boxes and a plurality of full-body head-shoulder boxes according to matching results between the plurality of initial head-shoulder boxes and the plurality of full-body head-shoulder boxes to obtain a plurality of target head-shoulder boxes; and determining a people counting result according to the screened initial head-shoulder boxes and the screened full-body head-shoulder boxes; wherein each target head-shoulder box comprises an initial head-shoulder box or a full-body head-shoulder box.

2. The method of claim 1, wherein for each full-body box, obtaining the corresponding head-shoulder box as the full-body head-shoulder box comprises:

determining a human body posture angle within the full-body box and determining a corresponding head-shoulder conversion feature according to the human body posture angle;
converting size information and position information of the full-body box according to the head-shoulder conversion feature to obtain size information and position information of the corresponding head-shoulder box; and
determining the full-body head-shoulder box according to the size information and the position information of the head-shoulder box.

3. The method of claim 1, wherein screening the plurality of initial head-shoulder boxes and the plurality of full-body head-shoulder boxes according to the matching results between the plurality of initial head-shoulder boxes and the plurality of full-body head-shoulder boxes to obtain the plurality of target head-shoulder boxes comprises:

determining a density estimation line according to positions of the plurality of initial head-shoulder boxes and the plurality of full-body head-shoulder boxes in the to-be-detected image, wherein the density estimation line is parallel to a target image edge line corresponding to an edge of a target detection region, the edge of the target detection region is closest to an image acquisition device, the density estimation line divides the to-be-detected image into a near-distance region and a far-distance region, and the near-distance region is a region between the density estimation line and the target image edge line;
determining overlap parameters of initial head-shoulder boxes and full-body head-shoulder boxes in the near-distance region and overlap parameters of initial head-shoulder boxes and full-body head-shoulder boxes in the far-distance region; and
determining the plurality of target head-shoulder boxes according to the overlap parameters.

4. The method of claim 3, wherein determining the density estimation line according to the positions of the plurality of initial head-shoulder boxes and the plurality of full-body head-shoulder boxes in the to-be-detected image comprises:

determining a plurality of candidate density estimation lines according to edge lines located on the plurality of initial head-shoulder boxes and the plurality of full-body head-shoulder boxes and farthest from the target image edge line; and sorting the plurality of candidate density estimation lines in ascending order according to distances from the plurality of candidate density estimation lines to the target image edge line;
sequentially determining, according to a sorting result, a ratio of a number of initial head-shoulder boxes and full-body head-shoulder boxes within a candidate near-distance region corresponding to each candidate density estimation line to a total number of initial head-shoulder boxes and full-body head-shoulder boxes in the to-be-detected image; and
determining a first candidate density estimation line whose ratio is greater than a preset ratio threshold as the density estimation line.

5. The method of claim 3, wherein determining the plurality of target head-shoulder boxes according to the overlap parameters comprises:

determining initial head-shoulder boxes and full-body head-shoulder boxes whose overlap parameters are greater than a preset overlap threshold as candidate initial head-shoulder boxes and candidate full-body head-shoulder boxes;
in response to the candidate initial head-shoulder boxes and the candidate full-body head-shoulder boxes being located in the near-distance region, removing the candidate full-body head-shoulder boxes; and
in response to the candidate initial head-shoulder boxes and the candidate full-body head-shoulder boxes being located in the far-distance region, removing the candidate initial head-shoulder boxes.

6. The method of claim 1, wherein determining the people counting result according to the screened initial head-shoulder boxes and the screened full-body head-shoulder boxes comprises:

determining a missed detection count according to target tracking information corresponding to the screened initial head-shoulder boxes and the screened full-body head-shoulder boxes and historical tracking information of historical image frames; and

determining the people counting result according to the screened initial head-shoulder boxes and the screened full-body head-shoulder boxes and the missed detection count.

7. The method of claim 6, wherein determining the missed detection count according to the target tracking information corresponding to the screened initial head-shoulder boxes and the screened full-body head-shoulder boxes and the historical tracking information of the historical image frames comprises:

determining missing targets in the to-be-detected image according to the historical tracking information and the target tracking information and determining a number of consecutive lost frames of the missing targets;

determining, according to historical tracking information of the missing targets, a prediction result indicating whether the missing targets are outside the detection region of the to-be-detected image; and

determining the missed detection count of the missing targets in the to-be-detected image according to the number of consecutive lost frames and the prediction result.

8. A people counting apparatus based on a full-scene image, comprising:

an image detection box determination module configured to detect a to-be-detected image to obtain a plurality of initial head-shoulder boxes and a plurality of full-body boxes in a full scene of the to-be-detected image;

a full-body head-shoulder box determination module configured to, for each full-body box, obtain a corresponding head-shoulder box as a full-body head-shoulder box; and

a people counting result determination module configured to screen the plurality of initial head-shoulder boxes and a plurality of full-body head-shoulder boxes according to matching results between the plurality of initial head-shoulder boxes and the plurality of full-body head-shoulder boxes to obtain a plurality of target head-shoulder boxes; and determine a people counting result according to the screened initial head-shoulder boxes and the screened full-body head-shoulder boxes; wherein each target head-shoulder box comprises an initial head-shoulder box or a full-body head-shoulder box.

9. An electronic device, comprising:

at least one processor; and
a memory communicatively connected to the at least one processor;
wherein the memory stores a computer program executable by the at least one processor to enable the at least one processor to perform the people counting method based on the full-scene image of any one of claims 1 to 7.

10. A computer-readable storage medium storing computer instructions which, when executed by a processor, cause the processor to perform the people counting method based on the full-scene image of any one of claims 1 to 7.

S110

Detect a to-be-detected image to obtain multiple initial head-shoulder boxes and multiple full-body boxes in a full scene of the to-be-detected image

S120

For each full-body box, obtain a corresponding head-shoulder box as a full-body head-shoulder box

S130

Screen the initial head-shoulder boxes and full-body head-shoulder boxes according to matching results between the initial head-shoulder boxes and the full-body head-shoulder boxes to obtain multiple target head-shoulder boxes; and determine a people counting result according to the screened initial head-shoulder boxes and the screened full-body head-shoulder boxes; where each target head-shoulder box includes an initial head-shoulder box or a full-body head-shoulder box

FIG. 1

**FIG. 2**

To-be-detected image

DEL

fn

Del

⋮

f3

f2

f1

Camera

**FIG. 3**

S210

Detect a to-be-detected image to obtain multiple initial head-shoulder boxes and multiple full-body boxes in a full scene of the to-be-detected image

S220

For each full-body box, obtain a corresponding head-shoulder box as a full-body head-shoulder box

S230

Screen the initial head-shoulder boxes and full-body head-shoulder boxes according to matching results between the initial head-shoulder boxes and the full-body head-shoulder boxes to obtain multiple target head-shoulder boxes

S240

Determine a missed detection count according to target tracking information corresponding to the screened initial head-shoulder boxes and the screened full-body head-shoulder boxes and historical tracking information of historical image frames

S250

Determine the people counting result according to the screened initial head-shoulder boxes and the screened full-body head-shoulder boxes and the missed detection count

**FIG. 4**

Displacement
vector

Displacement
vector

| t | | t-1 | | t-2 |

**FIG. 5**

310 320 330

| Image detection box determination module | Full-body head-shoulder box determination module | People counting result determination module |

**FIG. 6**

10

11 12 13

| Processor | ROM | RAM |

14

15

| I/O interface |

16 17 18 19

| Input unit | Output unit | Storage unit | Communication unit |

**FIG. 7**

## INTERNATIONAL SEARCH REPORT

| International application No. |
|---|
| **PCT/CN2024/090482** |

| A. | CLASSIFICATION OF SUBJECT MATTER |
|---|---|

G06V 20/52(2022.01)i

According to International Patent Classification (IPC) or to both national classification and IPC

| B. | FIELDS SEARCHED |
|---|---|

Minimum documentation searched (classification system followed by classification symbols)

IPC: G06V

Documentation searched other than minimum documentation to the extent that such documents are included in the fields searched

Electronic data base consulted during the international search (name of data base and, where practicable, search terms used)

VEN, CNABS, CNTXT, EPTXT, WOTXT, USTXT, CNKI, IEEE: 调整, 更新, 校正, 头, 肩, 整体, 人体, 躯体, 躯干, 计数, 检测, 统计, 识别, 姿态, 角度, 客, 人, 流量, 数目, 总数, 数量, 客流, 框, 区域, 矩形, head, shoulder, whole, body, box, count, pose, people, person, pedestrian

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 113592785 A (ZHEJIANG DAHUA TECHNOLOGY CO., LTD.) 02 November 2021 (2021-11-02)<br>description, paragraphs 96-119, and figures 2-4 | 1-10 |
| A | CN 108549846 A (BEIHANG UNIVERSITY) 18 September 2018 (2018-09-18)<br>entire document | 1-10 |
| A | CN 114783037 A (ZHEJIANG DAHUA TECHNOLOGY CO., LTD.) 22 July 2022 (2022-07-22)<br>entire document | 1-10 |
| A | CN 112507786 A (ZHEJIANG DAHUA TECHNOLOGY CO., LTD.) 16 March 2021 (2021-03-16)<br>entire document | 1-10 |
| A | CN 114548214 A (ZHEJIANG DAHUA TECHNOLOGY CO., LTD.) 27 May 2022 (2022-05-27)<br>entire document | 1-10 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 July 2024** | **16 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/090482** |

**C.    DOCUMENTS CONSIDERED TO BE RELEVANT**

| Category* | Citation of document, with indication, where appropriate, of the relevant passages | Relevant to claim No. |
| --- | --- | --- |
| A | LIN, Chiyang et al. "PedJointNet: Joint Head-Shoulder and Full Body Deep Network for Pedestrian Detection" *IEEE Access*, 19 April 2019 (2019-04-19),<br>       entire document | 1-10 |

Form PCT/ISA/210 (second sheet) (July 2022)

**INTERNATIONAL SEARCH REPORT**
Information on patent family members

International application No.

**PCT/CN2024/090482**

| Patent document cited in search report | | | Publication date (day/month/year) | Patent family member(s) | Publication date (day/month/year) |
|---|---|---|---|---|---|
| CN | 113592785 | A | 02 November 2021 | None | |
| CN | 108549846 | A | 18 September 2018 | None | |
| CN | 114783037 | A | 22 July 2022 | None | |
| CN | 112507786 | A | 16 March 2021 | None | |
| CN | 114548214 | A | 27 May 2022 | None | |

Form PCT/ISA/210 (patent family annex) (July 2022)

**REFERENCES CITED IN THE DESCRIPTION**

**Patent documents cited in the description**

- CN 202311402986